(19) Europäisches Patentamt
European Patent Office
Office européen des brevets

(11) **EP 2 376 265 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(51) Int Cl.:
**B29B 17/00** (2006.01)    **B29C 47/04** (2006.01)
**H01G 4/18** (2006.01)

(21) Anmeldenummer: **09771510.6**

(22) Anmeldetag: **08.12.2009**

(86) Internationale Anmeldenummer:
**PCT/EP2009/008746**

(87) Internationale Veröffentlichungsnummer:
**WO 2010/066398 (17.06.2010 Gazette 2010/24)**

(54) **VERFAHREN ZUR HERSTELLUNG VON POLYPROPYLENFOLIEN, BIAXIAL ORIENTIERTE POLYPROPYLENFOLIE**

METHOD FOR PRODUCING POLYPROPYLENE FILMS, BIAXIALLY ORIENTED SHEET OF POLYPROPYLENE

PROCÉDÉ DE FABRICATION DE FILMS DE POLYPROPYLÈNE, FEUILLE DE POLYPROPYLENE ORIENTEE DE MANIERE BIAXIALE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.12.2008   DE 102008061504**

(43) Veröffentlichungstag der Anmeldung:
**19.10.2011   Patentblatt 2011/42**

(73) Patentinhaber: **Treofan Germany GmbH & Co. KG**
**66539 Neunkirchen (DE)**

(72) Erfinder:
• **BUSCH, Detlef**
**66740 Saarlouis (DE)**

• **EIDEN, Harald**
**66424 Homburg (DE)**
• **PETERS, Christian**
**66386 St. Ingbert (DE)**
• **SCHAAN, Josef**
**66822 Lebach (DE)**

(74) Vertreter: **Kremer, Viola**
**Treofan Germany GmbH & Co. KG**
**Am Prime Parc 17**
**65479 Raunheim (DE)**

(56) Entgegenhaltungen:
**EP-A2- 0 740 993     EP-A2- 1 426 164**
**US-A- 5 252 389     US-A1- 2004 030 050**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Herstellung von biaxial orientierten Polypropylenfolien, die mindestens eine Schicht umfassen, und deren Verwendung.

Biaxial orientierte (boPP-Folien) Polypropylenfolien werden aufgrund ihrer guten Gebrauchseigenschaften für viele verschiedene Verpackungsanwendungen eingesetzt. Diese guten Gebrauchseigenschaften sind beispielsweise hohe mechanische Festigkeiten, gute Dimensionsstabilität und eine brillante Optik. Neben dem Einsatz als Verpackungsfolien werden boPP-Folien in beträchtlichen Mengen in technischen Anwendungen verwendet. Zu nennen sind die Metallisierung und die Transfermetallisierung, die Kaschierung und die Verwendung als Elektroisolationsfolie bei der Kondensatorherstellung.

Im Stand der Technik sind verschiedene Verfahren zur Herstellung von biaxial orientierten Polypropylenfolien bekannt. Beim sogenannten Stenterprozess wird die boPP-Folie durch Extrusion, Ausformung in einer Breitschlitzdüse und Streckung in Längs- und Querrichtung hergestellt.

Im einzelnen wird bei diesem Verfahren so vorgegangen, dass die Propylenpolymeren in einem Extruder komprimiert, erwärmt und aufgeschmolzen werden, anschließend die den einzelnen Schichten der Folie entsprechenden Schmelzen durch eine Flachdüse extrudiert werden, die so erhaltene Folie zur Verfestigung auf einer oder mehreren Walzen abgezogen wird, die Folie orientiert und anschließend thermofixiert wird. Abschließend wird die so hergestellte Maschinenrolle zur kundenfertigen Schnittrolle konfektioniert.

Bei dieser Herstellung von biaxial orientierten Folien entsteht prozessbedingt eine große Menge an Folienverschnitt, beispielsweise durch den sogenannten Saumstreifen. Saumstreifen sind die Folienränder, welche bei der Querstreckung von den Kluppen des Querstreckrahmens gegriffen, aber nicht mitverstreckt werden. Der unverstreckte Rand ist nach der Orientierung wesentlich dicker als die Folie und muß daher abgeschnitten werden. Je nach Folientyp und je nach Maschinenbreite kann der Materialverlust durch den Saumstreifen bis zu 25 Gew.-% betragen. Aus wirtschaftlichen Gründen ist es erforderlich, den Saumstreifen zusammen mit dem übrigen Folienverschnitt, welcher beim Konfektionieren, bei Abrissen oder beim An- und Ausfahren der Maschine entsteht, zu Regranulat zu verarbeiten und dem Originalrohstoff wieder zuzusetzen.

In einigen Anwendungsbereichen mit besonders hohen Qualitätsanforderungen an die Folie ist eine derartige Wiederverwertung von Folienverschnitt mit dem Originalrohstoff nicht möglich. Dies gilt beispielsweise bei der Herstellung von Elektroisolationsfolien, die bei der Herstellung von Kondensatoren eingesetzt werden. Für diese Anwendungen werden besondere Folieneigenschaften, wie beispielsweise ein geringer dielektrischer Verlustfaktor, ein hoher elektrischer Durchgangswiderstand, eine hohe Gleich- und Wechselspannungsfestigkeit sowie eine möglichst geringe Anzahl von Fehlstellen gefordert. Diese Eigenschaften werden unter anderem durch den Einsatz eines besonders reinen Polypropylens mit niedrigem Asche- und Chlorgehalt erreicht. Daneben dürfen die Polymeren keine ionogenen Bestandteile haben. Rohstoffe, die diese Reinheitsanforderungen erfüllen, sind natürlich wesentlich teurer als herkömmliche Verpackungsrohstoffe.

Es hat sich erwiesen, daß die hohen Qualitätsanforderungen an solche Elektroisolationsfolien bei Zusatz von Folienverschnitt zu dem hochreinen Rohstoff nicht mehr erfüllt werden. Der kontinuierliche Einsatz von Folienverschnitt im Produktionsprozeß führt zwangsläufig zu einem gewissen Gehalt an mehrfach recycliertem Material in der Folie, da immer wieder Folienmaterial, welches bereits Recyclat enthält, seinerseits erneut dem Recyclierungskreislauf zugeführt wird. Mit jedem neuen Zyklus wird immer wieder auch mehrfaches Recyclat erneut abgebaut und verunreinigt, so daß die Qualität des mehrfachen Recyclats immer schlechter wird. Je häufiger der jeweilige Recyclatanteil die Zyklen durchlaufen hat, desto geringer wird dessen Anteile in der fertigen Folie, aber die Qualität dieses Anteils wird parallel immer schlechter.

Dies hat in der Praxis zur Folge, daß der Folienverschnitt, der bei der Herstellung von Elektroisolierfolien anfällt, de facto zum Abfall wird, der nur noch in minderwertigen Anwendungen, beispielsweise bei der Herstellung von Verpackungsfolien oder im Spritzguß, verwendet werden kann. Folglich sind die wirtschaftlichen Verluste durch Folienverschnitt bei der Herstellung von Elektrofolien besonders ausgeprägt.

Auch im Bereich der Verpackungsfolien, die aus vergleichsweise günstigeren Rohstoffen hergestellt werden, kann mehrfach recycliertes Material die Folienqualität beeinträchtigen, insbesondere wenn der Anteil an Recyclat zu hoch wird. Daher müssen in diesem Fall die Mengen an mehrfachem Recyclat in der Folie kontrolliert und gegebenenfalls reduziert werden. Es besteht somit auch in diesem Bereich ein Bedarf die Verfahren zur Folienherstellung in ihrer Wirtschaftlichkeit und Qualität zu verbessern.

EP 0 740 993 beschreibt ein Verfahren zur Herstellung von biaxial orientierten Polypropylenfolien, bei welchem der Randbereich separat aus einem minderwertigen Rohstoff gefahren wird. Das hochreine Propylenpolymer der Folie wird in einem separaten Extruder aufgeschmolzen und zusammen mit diesem zweiten minderwertigem Propylenpolymer aus einem zweiten Extruder extrudiert. Dabei wird die Schmelze des zweiten Propylenpolymeren so an die beiden Seiten der ersten Propylenpolymerschmelze geführt wird, dass beide Schmelzen gemeinsam und gleichzeitig durch die Flachdüse extrudiert werden und das minderwertige Propylenpolymer den Randbereich der Folie während des Herstellungsprozesses bildet. Dieser Randbereich kann nach der Längs- und Querstreckung der Folie abgetrennt und erneut verwendet werden.

Die US 5252389 beschreibt ein biaxial gestreckte Polypropylenmonofolie aus reinem Polypropylen mit einem Aschegehalt kleiner 50 ppm. Die Folie weist auf beiden

Oberflächen der Polypropylenmonofolie unterschiedliche Rauhtiefen auf. Die glattere Oberfläche der Polypropylenmonofolie ist weitgehend fibrillenfrei und kraterlos. Die Folie wird als Elektroisolierfolie für die Herstellung von Kondensatoren verwendet.

In der Praxis zeigt sich, daß dieses Verfahren Nachteile aufweist. Im Grenzbereich zwischen Folienrand und Folie fließen die beiden verschiedenen Polymeren derart ineinander, daß eine saubere Abtrennung des minderwertigen Polymeren schwierig ist. Entweder die eigentliche Folie beinhaltet im Randbereich Verunreinigungen durch das minderwertige Polymere, so daß die Qualität über die Breite der Folie nicht gleichbleibend ist oder es muß ein überproportional breiter Rand abgeschnitten werden, was die Ausbeute des Verfahrens vermindert. Zusätzlich zeigt sich, daß das Polymere des Randbereiches nach mehreren Durchläufen derart abgebaut wird, daß es durch neues Material ersetzt werden muß. Dies beeinträchtigt zusätzlich den wirtschaftlichen Vorteil des Verfahrens.

Es besteht daher weiterhin ein Bedürfnis ein Verfahren zur Herstellung von Folien aus hochwertigem, beispielsweise besonders reinem, Polypropylen, anzugeben, welches die oben geschilderten Nachteile vermeidet. Das Verfahren soll insbesondere die wirtschaftlichen Verluste durch nicht wiederverwertbare Folienverschnitte vermindern.

Diese Aufgabe wird gelöst durch ein Verfahren zur Herstellung einer biaxial orientierten Polypropylenfolie, die mindestens eine Schicht umfasst, bei welchem ein Propylenpolymer B in einem ersten Extruder erwärmt und aufgeschmolzen wird und die Schmelze des Propylenpolymeren B durch eine Flachdüse extrudiert wird und die aus der Flachdüse tretende Schmelze auf einer oder mehreren Walzen abgezogen und zur Vorfolie verfestigt wird und diese Vorfolie in Längs- und Querrichtung gestreckt wird, dadurch gekennzeichnet, dass

A. in einem zweiten Extruder ein Propylenpolymer oder eine Propylenpolymermischung A ohne Recyclatanteil erwärmt und aufgeschmolzen wird und

B. die Schmelze des Propylenpolymeren oder der Propylenpolymermischung A so an die beiden Seiten der Propylenpolymerschmelze B geführt wird, dass alle Schmelzen gemeinsam und gleichzeitig durch die Flachdüse extrudiert werden und das Propylenpolymer oder die Propylenpolymermischung A ohne Recyclatanteil den Randbereich der Folie während des Herstellungsprozesses bildet, und

C. die Randbereiche aus dem Propylenpolymeren oder der Propylenpolymermischung A nach der Längs- und Querstreckung der Folie abgeschnitten werden und

D. dieses abgeschnittene Material aus dem Randbereich mit dem Polypropylenpolymeren B vermischt und zusammen in dem ersten Extruder aufgeschmolzen und zur Vorfolie extrudiert wird.

Durch das erfindungsgemäße Verfahren wird sichergestellt, daß der Folienverschnitt aus dem Randbereich vollständig wiederverwertet werden kann, aber die Folie kein Material enthält, welches mehr als einmal durch den Aufbereitungsprozeß gelaufen ist. Damit enthält das Endprodukt nur jungfräuliches Material und Material, welches nur einen einzigen Recyclierungsschritt durchlaufen hat.

Jungfräuliches Material oder jungfräuliches Polymer bedeutet im Sinne der vorliegenden Erfindung ein Polymer oder eine Polymermischung, welches nicht bereits in einem Folienherstellprozeß eingesetzt wurde und keinen Aufschmelzvorgang und eine anschließende Verfestigung der Schmelze bei einer Folienherstellung durchlaufen hat. Entsprechendes gilt bei einer Polymermischung für alle Komponenten der Mischung. Sowohl das Polypropylenpolymer B als auch Polypropylenpolymer A sind jungfräuliche Polymere in diesem Sinne. Sowohl Polymer A als auch Polymer B können auch Mischungen aus verschiedenen jungfräulichen Propylenpolymeren sein.

Recyclat ist im Sinne der vorliegenden Erfindung ein Polymer oder eine Polymermischung, welche bereits bestimmungsgemäß in einem Folienherstellprozeß eingesetzt wurde und bei der Folienherstellung und gegebenenfalls zusätzlich bei einer anschließenden Aufbereitung, aufgeschmolzen und wieder verfestigt wurde.

Mehrfaches Recyclat ist im Sinne der vorliegenden Erfindung Recylat, welches insgesamt bei der Folienherstellung und der Aufbereitung mehr als zweimal aufgeschmolzen und verfestigt wurde.

Einfaches Recyclat ist im Sinne der vorliegenden Erfindung ein Recylat, welches entweder nur ein einziges Mal bei der Folienherstellung oder zweimal, nämlich bei der Folienherstellung und einer anschließenden Aufbereitung, aufgeschmolzen und verfestigt wurde. Bei der Verwendung von einfachem Recylat zur Herstellung einer Folie wird dieser Recyclat-Anteil natürlich ein weiteres Mal aufgeschmolzen und verfestigt.

Auf diese Weise ist eine Folie, die nach dem erfindungsgemäßen Verfahren hergestellt wird, überwiegend aus jungfräulichem Polymeren B aufgebaut, welches nur einziges Mal, nämlich bei der eigentlichen Folienherstellung, aufgeschmolzen und wieder verfestigt wurde. Zusätzlich sind Anteile an einfachem Recyclat aus Polymer oder Polymermischung A enthalten, welches zweimal oder dreimal aufgeschmolzen und verfestigt wurde, nämlich ein erstes Mal beim Durchlaufen des Folienherstellprozesses als Randstreifen der Folie und ein zweites Mal durch Vermischen mit dem Polymeren B zur Herstellung des Folienendproduktes, sowie gegebenenfalls ein drittes Mal bei der Aufbereitung des Randstreifenabschnitts, beispielsweise zu Granulat. Somit unterscheiden sich die Polymeren A und B dadurch, daß das Polymere B in der Folie einmal aufgeschmolzen und verfestigt wird und das Polymere A in der Folie zweimal oder dreimal aufgeschmolzen und verfestigt wird. Die Folie enthält 1 bis 50 Gew.-% an einfachem Recyclat aus Polymer A, und entsprechend 50 bis 99 Gew.-% Polymere B, jeweils bezogen auf das Gesamtgewicht der Folie. Es ist grundsätzlich möglich, daß sowohl das Polymere B als auch das Randstreifen-Polymere A jeweils eine Mischung aus verschiedenen Polymeren ist. Erfindungsgemäß sind alle Anteile einer solchen Polymermischung B jungfräuliches Material und alle Anteile einer Polymermischung A, die zur Folienherstellung eingesetzt werden, maximal einfach recycliert.

Grundsätzlich können in dem erfindungsgemäßen Verfahren als Propylenpolymer B für die Folie und als Propylenpolymer A für den Randbereich, ähnlich wie bei dem in der EP 0 740 993 beschriebenen Verfahren, unterschiedliche Polymere eingesetzt werden. Im Unterschied zu dem in EP 0 740 993 beschriebenen Verfahren ist das Polymere A des Randbereiches jedoch so auszuwählen, daß es grundsätzlich auch den Anforderungen für die Folienherstellung entspricht, da es nach Verwendung als Randmaterial in der Folie selbst eingesetzt wird. Es ist daher im allgemeinen bevorzugt, daß in dem erfindungsgemäßen Verfahren im Randbereich und in der Folie die gleichen Polymeren oder zumindest Polymere vergleichbarer Qualität eingesetzt werden. Erfindungsgemäß wird der Verschnitt aus dem Randbereich nicht erneut zur Randextrusion eingesetzt, sondern mit dem Folienpolymer B vermischt und gemeinsam mit diesem zur Herstellung der Folie verwendet, um sicherzustellen, daß die Folie selbst nur jungfräulichen Rohstoff und einfaches Recyclat enthält.

Überraschenderweise wird die Folienqualität, insbesondere werden die elektrischen Eigenschaften der Folie, durch den Zusatz des einfachen Recyclats nicht beeinträchtigt. Nach dem Stand der Technik wird in Elektroisolierfolien kein Recyclat verwendet, da durch das mehrfache Recyclat die elektrischen Eigenschaften beeinträchtigt werden. In Verpackungsfolien können zu hohe Mengen an mehrfachem Recyclat die mechanischen Eigenschaften oder die Transparenz verschlechtern. Es wird vermutet, daß diese Beeinträchtigungen durch einen zu großen Anteil an mehrfach recycliertem Material verursacht werden, obgleich deren Anteil mit Anzahl der durchlaufenen Recyclierungsschritte immer kleiner wird. Überraschenderweise treten bei Zusatz von einfachem Recyclat keine oder nur geringe Verschlechterungen der Folieneigenschaften auf. Leichte Beeinträchtigungen der Folieneigenschaften durch das einfache Recyclat bewegen sich in einem solchen Rahmen, daß sie durch eine Verringerung des Anteils an einfachem Recyclat ausgeglichen werden können.

Nachstehend werden geeignete Polymere sowohl für das Polymere A des Randbereiches, als auch für das Polymere B der Folie beschrieben. Die Polymeren A und B können, aber sie müssen nicht identische Eigenschaften aufweisen. Vorzugsweise handelt es sich um die gleichen Polymeren. Mit der Bezeichnung Polymer A und Polymer B wird somit nicht eine unterschiedliche Zusammensetzung oder eine unterschiedliche Struktur der Polymeren, sondern vielmehr deren unterschiedliche Verwendung einmal im Randbereich (Polymer A) und einmal in der Folien (Polymer B) gekennzeichnet.

Die Polymeren A/B haben im allgemeinen einen Restaschegehalt kleiner oder gleich 70 ppm, vorzugsweise ≤50 ppm, insbesondere ≤40 ppm, und einen Chlorgehalt von ≤50 ppm, vorzugsweise ≤20 ppm, ist.

Die Polymeren A/B enthalten im allgemeinen 90 bis 100 Gew.-%, vorzugsweise 95 bis 100 Gew.-%, insbesondere 98 bis 100 Gew.-%, Propyleneinheiten, bezogen auf das Gewicht des Polymeren. Im allgemeinen haben die Polymeren A/B einen Schmelzpunkt von 150° C oder höher, vorzugsweise 155 bis 170°C, und einen Schmelzflussindex von 0,5 g/10 min bis 10 g/10 min, vorzugsweise 0,8 g/10 min bis 5 g/10 min, gemessen bei 230° C und einer Kraft von 21,6 N (DIN 53 735).

Besonders geeignete Polymere A/B haben ein mittleres Molekulargewicht Mw im Bereich von 150 000 bis 400 000, vorzugsweise von 180 000 bis 350 000. Die Molekulargewichtsverteilung kann in breiten Grenzen variieren, Mw/Mn beträgt im allgemeinen 2 bis 15, vorzugsweise 2 bis 6, insbesondere 3 bis 6.

Unter den vorstehend beschriebenen Polymeren A/B ist isotaktisches Propylenhomopolymer mit einem n-heptanlöslichen Anteil von 1 bis 15 Gew.-%, vorzugsweise 1 bis 10 Gew.-%, und mit einem Kettenisotaxieindex des n-heptanunlöslichen Anteils von ≥85 %, vorzugsweise ≥90 %, besonders bevorzugt. Des weiteren sind Copolymere von Ethylen und Propylen mit einem Ethylengehalt von 10 Gew.-% oder weniger, Copolymere von Propylen mit C4-C6-Olefinen mit einem Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger geeignet. Die angegebenen Gewichtsprozente beziehen sich auf das jeweilige Propylenpolymere.

Um bestimmte Eigenschaften der erfindungsgemässen Polypropylenfolie zu verbessern, werden den Polymeren A/B im allgemeinen Stabilisatoren und/oder Neutralisationsmittel und gegebenenfalls Nukleierungsmittel zugesetzt. Im Hinblick auf die gewünschten elektrischen Eigenschaften der Folie sollten in einer bevorzugten Ausführungsform kein Antistatikum und kein Gleitmittel zugefügt werden, da diese Zusatzstoffe die elektrischen Eigenschaften der Folie verschlechtern. Alle Mengenangaben in der folgenden Ausführung in Gewichtsprozent (Gew.-%) beziehen sich jeweils auf die Schicht oder Schichten, der oder denen das Additiv zugesetzt sein kann.

Als Stabilisatoren können die üblichen stabilisierend wirkenden Verbindungen für Ethylen-, Propylen- und andere alpha -Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis3-(3,5-di-Tertiärbutyl-4-Hydroxyphenyl)-Propionat oder 1,3,5-trimehtyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengrösse von höchstens 0,7μm, einer absoluten Teilchengrösse von kleiner 10μm und einer spezifischen Oberfläche von mindestens 40 m2/g. Im allgemeinen wird das Neutralisationsmittel in einer Menge von 0,02 bis 0,5 Gew.-% zugesetzt.

Nukleierungsmittel können organische Substanzen sein, vorzugsweise Dibenzylidensorbitol oder chemisch modifizierte Derivate des Dibenzylidensorbitols oder Natrium-Bis-(4-tert.-butylphenyl)phosphat. Weitere einsetzbare Nukleierungsmittel sind beispielsweise Metallsalze der Benzoesäure, vorzugsweise Natriumbenzoat, sowie Chinacridon und Chinacridonderivate. Auch anorganische Nukleierungsmittel wie beispielsweise Talkum, Siliziumdioxid oder Bentonit sind geeignet. Hierbei kommt es vor allem auf eine extrem feine Verteilung des Nukleierungsmittels an, d. h. die mittlere Teilchengrösse beträgt maximal 1μm, vorzugsweise maximal 0,7μm.

Für den Fall, daß die Polymeren A und B nicht identisch sind, sollten die Schmelzpunkte der beiden Polymeren in etwa gleich groß sein, d. h. sie sollten sich vorteilhafterweise um nicht mehr als 15° C, vorzugsweise um nicht mehr als 10°C, unterscheiden oder in etwa gleich groß sein. Weiterhin sind im allgemeinen die Schmelzflußindices (MFI) der beiden Rohstoffe, wenn sie verschieden sind, aufeinander abzustimmen, damit die Saumstreifen und die Folie fest miteinander verbunden sind. Der MFI des Propylenpolymeren A sollte vorzugsweise maximal das dreifache des MFI des Propylenpolymeren B betragen. Gegebenenfalls können die Schmelzindices der beiden Polymeren gleich groß sein, oder der MFI des Propylenpolymeren A kann etwas kleiner (10%) als der des Propylenpolymeren B sein.

Es ist möglich, daß bei gleichbleibender Düseneinstellung die Dicke des Folienrands über den MFI des Polymeren A gezielt variiert bzw. eingestellt werden kann, ohne daß sich die Dicke der Folie selbst ändert. Je größer der MFI des Polymeren A im Verhältnis zum MFI des Polymeren B ist, umso dicker wird der Randbereich und umgekehrt. Auf diese Weise kann die Saumstreifendicke unabhängig von der herzustellenden Folie optimiert werden. Dies ist bei der Herstellung von sehr dünnen Folien besonders vorteilhaft. Nach den herkömmlichen Verfahren muß die Düse im Randbereich vergleichsweise sehr weit geöffnet werden, um die ausreichende Dicke des Saumstreifens zu gewährleisten. Hierbei besteht die Gefahr, daß die Düsenlippen irreversibel verbogen wird. Nach dem erfindungsgemässen Verfahren sind derartige extreme Düseneinstellungen bei der Herstellung von sehr dünnen Folien nicht mehr notwendig.

Nach dem erfindungsgemässen Verfahren können einschichtige oder mehrschichtige Folien hergestellt werden. Mehrschichtige Polypropylenfolien umfassen die vorstehend beschriebene Folie, bzw. die Schicht dieser einschichtigen Ausführungsformen als Basisschicht und mindestens eine, gegebenenfalls beidseitige, Deckschicht/en, welche im allgemeinen 75 bis 100 Gew.-%, vorzugsweise 90 bis 99,5 Gew.-%, jeweils bezogen auf das Gewicht der Deckschicht, Polymere aus Olefinen mit 2 bis 10 Kohlenstoffatomen enthält/enthalten sowie, gegebenenfalls zusätzlich übliche Additive in jeweils wirksamen Mengen, soweit diese die elektrischen oder andere gewünschte Eigenschaften nicht negativ beeinflussen.

Geeignete olefinische Polymere für die Deckschicht/en sind beispielsweise Homopolymere, Co- oder Terpolymere aus Ethylen, Propylen oder Butylen-Einheiten aufgebaut, wobei Terpolymere drei verschiedene Monomere enthalten. Die Zusammensetzung der Co- oder Terpolymeren aus den jeweiligen Monomeren kann in breiten Grenzen variieren. Im allgemeinen enthalten die Co- und/oder Terpolymeren über 50 Gew.-% Propylen-Einheiten, d.h es sind Propylenco- und/oder Propylenterpolymere mit Ethylen- und/oder Butylen-Einheiten als Comonomere. Copolymere enthalten im allgemeinen mindestens 60 - 99 Gew.-%, vorzugsweise 65 bis 97 Gew.-% Propylen und höchstens 1 - 40 Gew.-%, vorzugsweise 3 bis 35 Gew.-% Ethylen oder Butylen als Comonomer. Terpolymere enthalten im allgemeinen 65 bis 96 Gew.-%, vorzugsweise 72 bis 93 Gew.-% Propylen, und 3 bis 34 Gew.-%, vorzugsweise 5 bis 26 Gew.-% Ethylen und 1 bis 10 Gew.-%, vorzugsweise 2 bis 8 Gew.-% Butylen. Der Schmelzindex der Co- und/oder Terpolymeren beträgt im allgemeinen 0,1 bis 20 g/10min (190°C, 21,6N), vorzugsweise 0,1 bis 15 g/10min. Der Schmelzpunkt kann in einem Bereich von 70 bis 150°C liegen, vorzugsweise 100 bis 140°C.

Gegebenenfalls können die vorstehend genannten Co- und Terpolymeren untereinander gemischt werden. Hierbei können die Anteile von Co- zu Terpolymer in beliebigen Grenzen variieren.

In einer bevorzugten Ausführungsform wird statt der genannten Co- und/oder Terpolymeren Propylenhomopolymer in der/den Deckschicht/en verwendet. Geeignete Propylenhomopolymere sind solche, die vorstehend im Einzelnen als jungfräuliche Propylenhomopolymere B der Folie beschrieben sind.

Für die Anwendung als Elektroisolierfolien sind insbesondere Ausführungsformen geeignet, welche ein- oder beidseitig Deckschicht/en aufweisen, welche ihrerseits nur aus jungfräulichem Propylenpolymer aufgebaut sind, d.h. 90 - 100 Gew.-%, vorzugsweise 98 - <100Gew.-% dieses jungfräulichen Propylenpolymer enthalten. Geeignete jungfräuliche Propylenpolymere sind vorstehend als Polymere A/B ausführlich beschrieben.

Es wurde gefunden, daß diese Ausführungsformen weitere Vorteile bei der Verwendung in Kondensatoren aufweisen. Dies wird darauf zurückgeführt, daß die Basisschicht, welche zusätzlich zu Polymer B einfaches Recyclat enthält, durch mindestens eine Deckschicht ohne Recyclat abgedeckt ist und somit mögliche negative Auswirkungen des Recylat-Anteils in der Basisschicht abgemildert werden. Daher ist es insbesondere bevorzugt die Recyclat-haltige Basisschicht beidseitig durch Recyclat-freie Deckschichten abzudecken.

Mehrschichtige Ausführungsformen von Folien, die nach dem erfindungsgemässen Verfahren hergestellt werden, umfassen eine Basisschicht und mindestens die vorstehend beschriebene Deckschicht. Die Basisschicht kann auch beidseitig Deckschichten und gegebenenfalls zusätzliche Zwischenschichten aufweisen. Die Basisschicht ist im Sinne der vorliegenden Erfindung diejenige Schicht, welche mehr als 50 bis 100 %, vorzugsweise 70 bis 95 %, der Gesamtfoliendicke ausmacht. Die Deckschicht ist die Schicht, welche die äußerste Schicht der Folie bildet.

Die Gesamtdicke der Folien, die nach dem erfindungsgemässen Verfahren herstellbar sind, kann innerhalb weiter Grenzen variieren und richtet sich nach dem beabsichtigten Verwendungszweck. Die bevorzugten Ausführungsformen der Folie haben Gesamtdicken von 2 bis 100$\mu$m, wobei 2 bis 50$\mu$m, insbesondere 2 bis 20$\mu$m, bevorzugt sind. Die Dicke der gegebenenfalls vorhandenen Zwischenschicht/en beträgt 0,5 bis 15$\mu$m. Die Dicke der Deckschicht/en liegt bevorzugt im Bereich von 0,1 bis 10$\mu$m, insbesondere 0,2 bis 5$\mu$m, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke variieren.

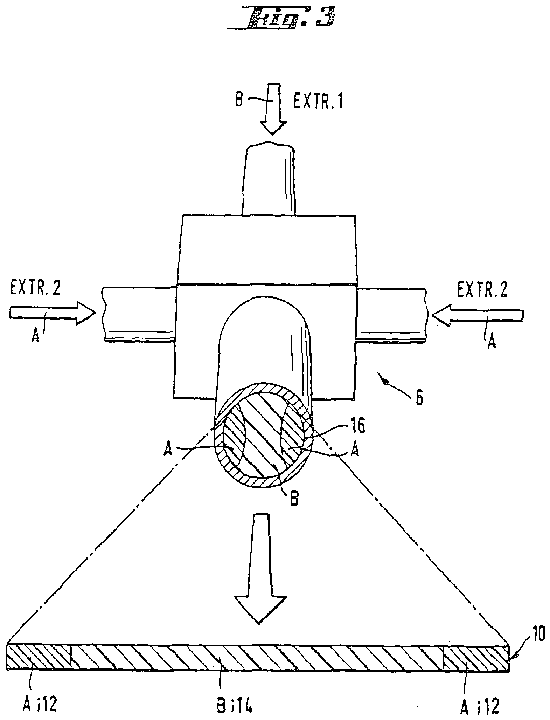

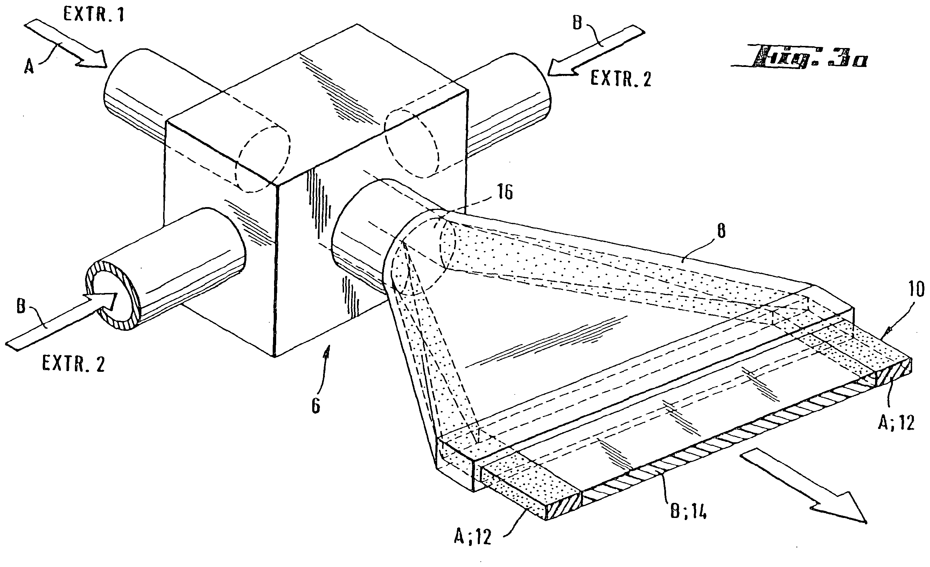

Im Rahmen des erfindungsgemäßen Verfahrens werden Propylenpolymere B und einfaches Recyclat aus Polymer A in einem ersten Hauptextruder (EXTR. 1) vermischt, komprimiert, erwärmt und aufgeschmolzen (Schmelze 1). In einem zweiten Extruder (EXTR. 2) wird das Propylenpolymer A (nur jungfräuliches Material) ebenfalls komprimiert, erwärmt und aufgeschmolzen (Schmelze 2). Dem Propylenpolymer A wird kein Material zugesetzt, welches bereits vorher bei der Herstellung einer Folie verwendet wurde (im Rahmen der Erfindung "jungfräulich" genannt). Die Schmelze 2 des jungfräulichen Propylenpolymeren A wird so an die beiden Seiten der Schmelze 1 aus Polymer B und einfachem Recyclat A geführt, daß die beiden Schmelzen 1 und 2 gemeinsam und gleichzeitig durch die Flachdüse extrudiert werden und das Propylenpolymere A den Randbereich der Folie während des Herstellungsprozesses bildet. Die Führung der Polymerschmelze 2 an den Rand der Schmelze 1 kann beispielsweise wie in Figur 3 dargestellt mit einem um 90° gedrehten Coextrusionsadapter erfolgen. Es versteht sich von selbst, daß bei Beginn des Herstellprozesses, wenn noch kein Recyclat zur Verfügung steht, die Schmelze 1 nur aus dem Polymer B (ohne Recyclat) bestehen wird, bis genügend einfaches Recyclat aus Polymer A zur Rückführung angefallen ist.

Die Figuren 3 und 3A stellen die Verwendung des Coextrusionsadapters 6 in einer erfindungsgemäßen Anordnung dar. Das Komprimieren, Erwärmen und Schmelzen der Polymeren sowie die Zuführung der Schmelzeströme 1 und 2 erfolgt analog. Die Schmelzeströme 1 und 2 werden wie dargestellt (16) nebeneinandergelegt. In der Breitschlitzdüse 8 werden die nebeneinandergelegten Schmelzen zu einer Folie 10 ausgeformt, deren Randbereiche (12) aus dem Polymeren A (aus dem Schmelzestrom des Extruders 2) aufgebaut sind. Die eigentliche Folie (14) besteht aus dem Polymeren B (aus dem Schmelzestrom des Extruders 1).

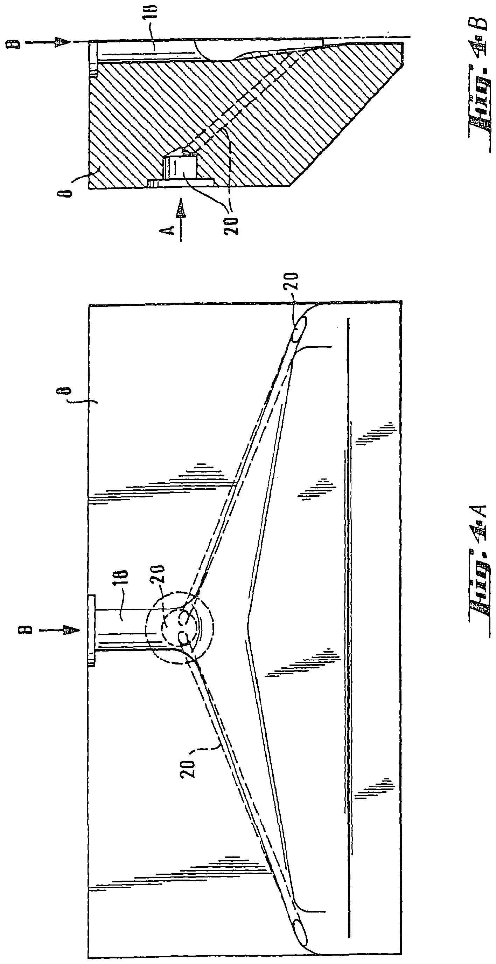

Für das erfindungsgemässe Verfahren ist auch eine Monodüse geeignet, bei welcher die Schmelze A seitlich eingespritzt wird (sogenannte Öhrchendüse). Den prinzipiellen Aufbau einer Öhrchendüse zeigt Figur 4A und B. Die Breitschlitzdüse 8 weist links und rechts des Hauptkanals 18 je eine Bohrung 20 auf. Die Schmelze B wird durch den Hauptkanal 18 in den mittleren Teil der Düse geführt. Die Schmelze A strömt über die Bohrungen 20 in die beiden Randbereiche der Düse ein. Auf diese Weise werden die Schmelzen 1 und 2 nebeneinanderliegend zu einer Folie ausgeformt, deren Randbereiche aus dem Polymeren A bestehen.

Die so extrudierte Folie wird zur Verfestigung auf einer oder mehreren Walze/n abgezogen. Es hat sich als besonders günstig erwiesen, die Abzugswalze oder - walzen, durch die die ausgepresste Folie verfestigt wird, bei einer Temperatur von mindestens 70°C zu halten, bevorzugt 80 bis 120°C.

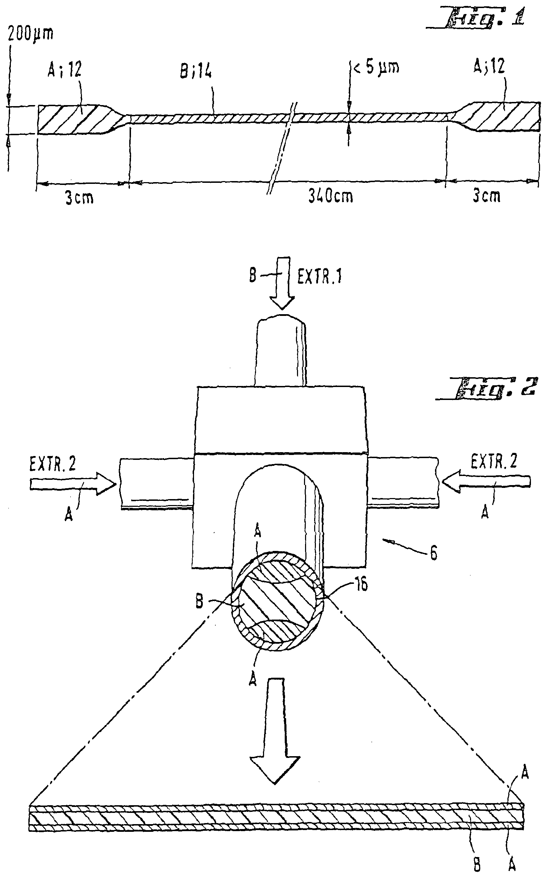

Die so erhaltene Vorfolie wird längs und quer zur Extrusionsrichtung gestreckt, was zu einer biaxialen Orientierung der Molekülketten führt. Die biaxiale Orientierung wird aufeinanderfolgend durchgeführt, wobei vorzugsweise zuerst längs (in Maschinenrichtung) und dann quer (senkrecht zur Maschinenrichtung) gestreckt wird. In Längsrichtung wird vorzugsweise um 4:1 bis 9:1, insbesondere 5:1 bis 8,5:1, und in Querrichtung vorzugsweise um 6:1 bis 11:1 gestreckt. Das Längsstrecken wird man zweckmässigerweise mit Hilfe zweier entsprechend dem angestrebten Streckverhältnis verschieden schnellaufender Walzen durchführen und das Querstrecken mit Hilfe eines entsprechenden Kluppenrahmens. Die Kluppen ergreifen den Randbereich der Folie, so dass im wesentlichen nur die Mischung aus Polymer B und einfachem Recyclat aus Polymer A zu einer dünnen Folie verstreckt wird (14) und die Ränder (12) aus dem Polymeren A unverstreckt und dick bleibt. Eine entsprechende schematische Darstellung zeigt Figur 1.

Die Temperaturen, bei denen die Längs- und die Querstreckung durchgeführt werden, können in einem großen Bereich variieren und richten sich nach der jeweiligen Zusammensetzung der Schichten und nach den gewünschten Eigenschaften der Folie. Im allgemeinen wird die Längsstreckung bei 80 bis 160°C, vorzugsweise 100 bis 160°C, und die Querstreckung bei 120 bis 170°C, vorzugsweise 130 bis 160°C, durchgeführt.

An die biaxiale Streckung der Folie schließt sich ihre Thermofixierung (Wärmebehandlung) an, wobei die Folie etwa 0,1 bis 10 s lang bei einer Temperatur von 100 bis 160°C, vorzugsweise 110 bis 130°C, gehalten wird.

Bevorzugt wird/werden wie oben erwähnt nach der biaxialen Streckung eine oder beide Oberfläche/n der Folie nach einer der bekannten Methoden corona- oder flamm- oder plasma-behandelt werden. Die Behandlungsintensitäten liegen im üblichen Rahmen, wobei 35 bis 50 mN/m, vorzugsweise 36 bis 45 mN/m, sind.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, dass Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so dass polare Einlagerungen in der im wesentlichen unpolaren Polymermatrix entstehen.

Nach der optionalen Oberflächenbehandlung oder nach der Thermofixierung wird die Folie mit üblichen Schneidvorrichtungen gesäumt, und die Folie selbst wird mit einer an sich bekannten Aufwickeleinrichtung aufgewickelt. Im allgemeinen beträgt die Breite der beiden zu säumenden Ränder bis zu 300 mm, vorzugsweise 100 bis 200 mm, und besteht zu mindestens 90 Gew.-%, vorzugsweise aus 95 - 100 Gew.-%, insbesondere 99 - 100 Gew.-% aus den Propylenpolymeren A. Bei der Abtrennung des Randstreifens sollte die Breite des gesäumten Randes vorteilhaft so gewählt werden, daß möglichst das Gesamte als Randstreifen abgetrennte Material zu nahezu 100 Gew.-%, d.h. nur aus dem jungfräulichen Polymer A besteht. Der Vorteil des erfindungsgemäßen Verfahren liegt auch darin, daß es nicht erforderlich ist den Randstreifen so breit abzutrennen, daß die Folie gar kein Randstreifenpolymer A mehr beinhaltet, da das Polymer A jetzt ausreichende Folienqualität hat und keine Bereiche mit beeinträchtigter Qualität bildet. Hingegen ist es bei dem Verfahren nach EP 0 740 993 unbedingt notwendig den Randstreifen so breit abzutrennen, daß alles an Polymer A weggeschnitten wird und die Folie kein Polymer A mehr beinhaltet. Dies führt dann zu einem Randstreifenverschnitt, der eine Mischung aus Polymer A und geringen Mengen Polymer B ist. Auf jeden Fall erfordert das Verfahren nach EP 0 740 993 einen vergleichsweise breiten Randstreifen zu säumen, wohingegen nach dem vorliegenden erfindungsgemäßen Verfahren die Breite des zu säumenden Randstreifens schmal gehalten werden kann. Dies gilt natürlich insbesondere, wenn als Polymer A und B identische Rohstoffe eingesetzt werden, wie es bei einer bevorzugten Ausführungsform der Fall ist.

Bei üblichen Herstellungsverfahren hat der Folienrand eine Dicke von bis zu 200 $\mu$m, im allgemeinen von 20 bis 100 $\mu$m, vorzugsweise 20 bis 50 $\mu$m. Je nach Gegebenheiten können auch Randdicken darüber oder darunter geeignet sein.

Erfindungsgemäß werden die abgeschnittenen (gesäumten) Randbereiche gehäckselt, gegebenenfalls einmal granuliert, mit dem Polymeren B vermischt und so als Recyclat in der Folie wiederverwendet. Das erfindungsgemäße Verfahren stellt sicher, daß das Propylenpolymere A in der fertigen Folie maximal dreimal, vorzugsweise nur zweimal den Extrusionprozeß durchlaufen hat, zunächst als Randstreifenmaterial und dann als Beimischung zum eigentlichen Folienrohstoff. Ein dritter Extrusionsschritt kann hinzukommen, wenn eine Regranulierung des geschnittenen Randstreifenmaterials vor dem Vermischen mit Polymer B erfolgt. Da der Randstreifen der Folie im Herstellprozeß kontinuierlich und vollständig aus jungfräulichem Polymer gefahren wird, kann kein Material entstehen, welches mehrfach, d.h. mehr als zwei- oder dreimal einen Extrusionsprozeß durchläuft. Überraschenderweise werden weder die elektrischen noch sonstige Eigenschaften der Folie durch den Anteil an einmalig recyclierte Polymere negativ beeinflußt.

Die nach diesem erfindungsgemäßen Verfahren hergestellte Folie ist daher hervorragend zur Verwendung als Dielektrikum in Kondensatoren geeignet. Gegebenenfalls kann die Folie vorher nach den im Stand der Technik bekannten Verfahren metallisiert werden. Es wurde gefunden, daß die Recyclat-Anteile die Gebrauchseigenschaften der Kondensatoren nur unwesentlich oder gar nicht beeinträchtigen. Damit sind erhebliche Kostenvorteile ohne Qualitätseinbußen möglich.

Zur Charakterisierung der Rohstoffe und der Folien wurden die folgenden Messmethoden benutzt:

Schmelzflussindex:

Der Schmelzflussindex wurde in Anlehnung an DIN 53 735 bei 21,6 N Belastung und 230°C gemessen.

Schmelzpunkt:

DSC-Messung, Maximum der Schmelzkurve, Aufheizgeschwindigkeit 20°C/min.

E-Modul

Der E-Modul wird frühestens 10 Tage nach der Produktion gemäß EN ISO 521-1 an einer Probe einer Größe von 15*100 mm$^2$, bestimmt.

Schrumpf:

Die Längs- und Querschrumpfwerte beziehen sich auf die jeweilige Längenausdehnung der Folie (längs $L_0$ und quer $Q_0$) vor dem Schrumpfprozeß. Die Längsrichtung ist die Maschinenrichtung, als Querrichtung wird entsprechend die Richtung quer zum Maschinenlauf definiert. Der Probekörper von 10*10cm$^2$ wird im Umluftofen bei der jeweiligen Temperatur (von100 bis 140°C) über eine Dauer von 15 min geschrumpft. Anschließend werden die verbliebenen Längenausdehnungen des Probekörpers längs und quer erneut bestimmt ($L_1$ und $Q_1$). Als Schrumpf in % wird dann die Differenz der ermittelten Längenausdehnungen im Verhältnis zur ursprünglichen Länge $L_0$ und $Q_0$ mal 100 angegeben.

$$\textit{Längsschrumpf } L_s[\%] \;=\; \frac{L_0 - L_1}{L_0} * 100[\%]$$

$$\textit{Querschrumpf } Q_s[\%] \;=\; \frac{Q_0 - Q_1}{Q_0} * 100[\%]$$

Diese Bestimmungsmethode für den Längs- und Querschrumpf entspricht DIN 40634.

Dielektrischer Verlustfaktor:

Die Messung des dielektrischen Verlustfaktors (tan $\alpha$) wird nach VDE 0303, Teil 4 durchgeführt. Die Folienproben werden vor der Messung in einer Vakuumbedampfungsanlage beidseitig mit Aluminium bedampft. Die Größe der Meßfläche F (= bedampfter Fläche) richtet sich nach der Foliendicke d:

für eine Foliendicke d von $\leq$ 10 $\mu$m eine Fläche von 1 cm$^2$
für eine Foliendicke d von > 10 $\mu$m eine Fläche von 5 cm$^2$

Es wird von jedem zu prüfenden Muster eine Doppelbestimmung durchgeführt und der Mittelwert gebildet. Die Proben werden in einen Trockenschrank gelegt. Die untere Elektrodenplatte besteht aus Messing. Die obere Elektrode ist zylinderförmig und besteht ebenfalls aus Messing. Die Prüfspannung beträgt 1V. Die Messung erfolgt bei drei Frequenzen von 0,1 KHz, 1 KHz und 10 KHz.

Restaschegehalt:

Zur Messung des Restaschegehalts wird der Anteil der nicht verbrennbaren mineralischen Füllstoffe quantitativ bestimmt. Der Restaschegehalt (Glühverlust) errechnet sich aus dem Ausgangsgewicht der Probe und dem Glührückstand. Das Messergebnis wird in ppm angegeben. Aus dem zu prüfenden Material (Granulat, Regenerat usw.) wird eine repräsentative Stichprobe von ca. 1 kg entnommen. Das Material muss sauber und vollkommen trocken sein; eventuell ist ein Vortrocknen bei ca. 80°C im Umluftwärmeschrank erforderlich. Drei leere Porzellantiegel werden mindestens 1 h lang bei einer Temperatur von 650°C im Tiegelofen geglüht und nach Abkühlung im Exsikkator auf Raumtemperatur auf 0,1 mg Genauigkeit gewogen. Das Glühen wird wiederholt, bis zwischen zwei aufeinanderfolgenden Wägungen Gewichtskonstanz erreicht ist. Danach wird in jeden Tiegel 50 g (+/-0,1 g) Material eingewogen und in den 650°C heissen Muffelofen gegeben. Die Temperatur im Ofen wird jetzt auf 1 000°C hochgefahren und bei dieser Temperatur mindestens 1 h geglüht. Nach Abkühlung der Tiegel im Exsikkator werden diese auf 0,1 mg Genauigkeit ausgewogen. Der Aschegehalt wird in Masseinheit ppm (parts per million) = mg/m$^3$ angegeben. Alle drei Tiegel werden nach der folgenden Formel ausgewertet, und die beiden am wenigsten differierenden Werte zu einem Mittelwert zusammengefasst:

ppm = Auswaage (g) / Einwaage (g) x 1 000 000

Chlorgehalt:

Der Chlorgehalt in Polyolefinen wird quantitativ mittels Röntgen-Fluoreszenz-Analyse (RFA) nach DIN 51 001, Teil 1, gemessen. Es wird eine Tablette aus Granulat/Pulver gepresst, die mit der RFA gegen eine Kalibrierkurve vermessen wird. Die Kalibrierkurve wurde mit Hilfe von 10 Kalibrierproben aufgestellt, in denen der Chlorgehalt nach einer unabhängigen Methode (nasstechnisch) bestimmt wurde.

Molekulargewichtsbestimmung:

Zur Bestimmung des mittleren Molekulargewichts Mw wird die Drei-Detektor-Gelpermeationschromographie verwendet. Die Substanz wird in einem Laufmittel wie THF aufgelöst und über eine Trennsäule gegeben. Die Trennsäule ist 90 cm lang und mit einem porösen Trägermaterial gefüllt, dessen Porengrösse 5 $\mu$m beträgt. Die Detektion erfolgt mittels UV-Absorptionsspektroskopie bei verschiedenen Wellenlängen sowie mittels Brechungsindex und Lichtstreuvermögen der Fraktionen. Die Eichung wird über eine Standardverbindung mit bekanntem Molekulargewicht durchgeführt. Der Vergleich der UV-Absorption der Standardsubstanz mit der Absorption der Probe ermöglicht die Zuordnung der Molekulargewichte (DIN 55 672 Teil 1).

Die Erfindung wird nun anhand von Ausführungsbeispielen näher erläutert:

Beispiel 1

Es wurde durch Extrusion und durch anschließende stufenweise Orientierung in Längs- und Querrichtung eine transparente Folie mit einer Dicke von 6 $\mu$m und einer ungesäumten Breite von 4940 mm hergestellt. Die hergestellte Folie war einschichtig. Zu Beginn der Herstellung wurden die nebeneinanderliegenden Schmelzen "Säumstreifen-Folie-Säumstreifen" aus dem gleichen Rohstoff gefahren. Zur gemeinsamen Extrusion und Anordnung der separaten Schmelzeströme wurde die Adaptertechnik verwendet, welche gegenüber der üblichen Anordnung bei einer mehrschichtigen Coextrusion um 90°gedreht wurde

B-Originalpolymer für Folie:

| ~100 Gew.-% | hochisotaktisches Polypropylen der Firma Borealis (Bezeichnung HB 300 BF) mit einem Schmelzpunkt von 165°C und einem Schmelzflußindex bei 230°C und 2,16N von 3,5g/10min mit einem Restaschegehalt von ca. 20ppm und einem Chlorgehalt von <1ppm |
| 0,45 Gew.-% | phenolischer Stabilisator Irganox 1010 |
| 0,0075 Gew.-% | Neutralisationsmittel Ca-Stearat |

A-Saumstreifenpolymer:

| ~100 Gew.-% | hochisotaktisches Polypropylen der Firma Borealis (Bezeichnung HB 300 BF) mit einem Schmelzpunkt von 165°C und einem Schmelzflußindex bei 230°C und 2,16N von 3,5g/10min mit einem Restaschegehalt von ca. 20ppm und einem Chlorgehalt von <1ppm. |
| 0,45 Gew.-% | phenolischer Stabilisator Irganox 1010 |
| 0,0075 Gew.-% | Neutralisationsmittel Ca-Stearat |

Nach dem Anfahren wurde ein 10cm breiter. Saumstreifen auf beiden Seiten im Auslaufbereich vor dem Aufwickeln der Folie abgetrennt und in einem Häcksler zerkleinert. Diese Folienschnitzel wurden über Transportleitungen dem Extruder mit dem Folienrohstoff B zugeführt, vermischt und gemeinsam mit dem Originalrohstoff aufgeschmolzen. Der Randbereich wurde weiterhin kontinuierlich mit jungfräulichem Originalrohstoff gefahren.

Die Herstellungsbedingungen in den einzelnen Verfahrensschritten waren:

| Extrusion: | Temperaturen | 250 °C |
| | Temperatur der Abzugswalze: | 97°C |

(fortgesetzt)

| | | |
|---|---|---|
| Längsstreckung: | Längsstrecktemperatur: | 150°C |
| | Längsstreckverhältnis: | 5,5 |
| Querstreckung: | Temperatur: | 160°C |
| | Querstreckverhältnis: | 9,5 |
| Fixierung: | Temperatur: | 140 °C |
| | Konvergenz: | 15% |

Bei dem angegebenen Querstreckverhältnis handelt es sich um einen Effektivwert. Dieser Effektivwert berechnet sich aus der Endfolienbreite, reduziert um die zweifach Säumstreifenbreite, dividiert durch die Breite der längsgestreckten Folie, welche ebenfalls um die zweifache Säumstreifenbreite reduziert wird.

Auf diese Weise wurde eine Folie hergestellt, welche ca. 22 Gew.-% einmalig recylierten Rohstoff enthielt

Beispiele 2a bis 2c

Im Vergleich zu Beispiel 1 wurden die Folienschnitzel in einem separaten Verarbeitungschritt durch einmaliges Aufschmelzen und Abkühlen zu Regranulat aufgearbeitet. Dieses Regranulat wurde dann in analoger Weise zusammen mit dem Folienrohstoff B verarbeitet. Auf diese Weise wurden weitere Folien hergestellt, welche 5%, 10%, 30% einfach recylierten Rohstoff enthielten.

Vergleichsbeispiel 1:

Im Vergleich zu Beispiel 1 wurde der Randbereich nicht mit einem separaten Schmelzestrom, sondern Folie und Randbereich aus einem Extruder gefahren. Wie in Beispiel 1 beschrieben wurde der Randbereich gesäumt, gehäckselt und bei der Folienherstellung wiederverwendet. Auf diese Weise wurde eine Folie hergestellt, welche ca.22 % mehrfach recylierten Rohstoff enthielt.

Vergleichsbeispiel 2:

Im Vergleich zu Beispiel 1 wurde der Randbereich nicht mit einem separaten Schmelzestrom, sondern Folie und Randbereich aus einem Extruder gefahren. Der Randbereich wurde gesäumt und verworfen, d.h. die Folienherstellung erfolgte nur mit Originalrohstoff und enthielt weder einfach noch mehrfach recyclierten Rohstoff.

Beispiel 3:

Es wurde eine Folie wie in Beispiel 1 beschrieben hergestellt. Im Unterschied zu Beispiel 1 wurde eine dreischichtige Folie coextrudiert, welche auf beiden Oberflächen der Basisschicht eine Deckschicht aufwies. Die Basisschicht entsprach der Folie aus Beispiel 1. Die beiden zusätzlichen Deckschicht waren zu 100 Gew.-% aus dem Propylenpolymeren B gemäß Beispiel 1 aufgebaut. Die Dicke der Basisschicht betrug ca. 5$\mu$m. Die Dicke jeder Deckschicht betrug ca. 0,5$\mu$m, so daß die Gesamtdicke der Folie wie in Beispiel 1 6$\mu$m betrug. Die übrige Zusammensetzung, sowie die Verfahrensbedingungen wurden gegenüber Beispiel 1 nicht geändert. Auf diese Weise wurde eine dreischichtige Folie hergestellt, welche ca. 26 Gew.-% einmalig recycliertes Polymer in der Basisschicht (entsprechend 22 Gew.-% bezogen auf die Folie) enthielt.

Beispiel 4:

Es wurde eine Folie wie in Beispiel 2b beschrieben hergestellt. Im Unterschied zu Beispiel 2b wurde eine dreischichtige Folie coextrudiert, welche auf beiden

Oberflächen der Basisschicht eine Deckschicht aufwies. Die Basisschicht entsprach der Folie aus Beispiel 2b. Die beiden zusätzlichen Deckschicht waren zu 100 Gew.-% aus dem Propylenpolymeren B gemäß Beispiel 2b aufgebaut. Die Dicke der Basisschicht betrug ca. 5$\mu$m. Die Dicke jeder Deckschicht betrug ca. 0,5$\mu$m, so daß die Gesamtdicke der Folie wie in Beispiel 2b 6$\mu$m betrug. Die übrige Zusammensetzung, sowie die Verfahrensbedingungen wurden gegenüber Beispiel 2b nicht geändert. Auf diese Weise wurde eine dreischichtige Folie hergestellt, welche ca. 12 Gew.-% einmalig recycliertes Polymer in der Basisschicht (entsprechend 10 Gew.-% bezogen auf die Folie) enthielt.

| Beispiel | Durchbruchspannung AC/DC [KV/mm] | E-Modul MD/TD [N/mm2] | Schrumpf MD/TD [%] | Fehlstellen in Anzahl pro qm bei 300V |
|---|---|---|---|---|
| 1 | 419/813 | 2820/4700 | 3,0/0,60 | 0 |
| 2a | 410/795 | 2825/4710 | 3,0/0,62 | 0 |
| 2b | 425/780 | 2798/4680 | 3,2/0,65 | 0 |
| 2c | 428/755 | 2752/4580 | 3,2/0,65 | 1 |
| VB1 | 380/650 | 2500/4300 | 3,4/0,66 | 5 |
| VB2 | 420/815 | 2910/4850 | 3,1/0,62 | 0 |
| 3 | 420/813 | 2870/4750 | 3,0/0,60 | 0 |
| 4 | 418/805 | 2875/4720 | 3,2/0,60 | 0 |

**Patentansprüche**

1. Verfahren zur Herstellung einer biaxial orientierten Polypropylenfolie, die mindestens eine Schicht umfasst, bei welchem Propylenpolymer B in einem ersten Extruder erwärmt und aufgeschmolzen wird und die Schmelze des Propylenpolymeren B durch eine Flachdüse ausgeformt und extrudiert wird und die aus der Flachdüse tretende Schmelze auf einer oder mehreren Walzen abgezogen und zur Vorfolie verfestigt wird und diese Vorfolie in Längs- und Querrichtung gestreckt wird, **dadurch gekennzeichnet, dass**

   A. in einem zweiten Extruder Propylenpolymer A ohne Recyclat-Anteil erwärmt und aufgeschmolzen wird und
   B. die Schmelze des Propylenpolymeren A so an die beiden Seiten der Propylenpolymerschmelze B geführt wird, dass alle Schmelzen gemeinsam und gleichzeitig durch die Flachdüse extrudiert werden und das Propylenpolymer A ohne Recyclat-Anteil den Randbereich der Folie während des Herstellungsprozesses bildet, und
   C. die beiden Randbereiche aus dem Propylenpolymeren A nach der Längs- und Querstreckung der Folie abgeschnitten werden und
   D. dieser Folienverschnitt aus den beiden Randbereichen zusammen mit dem Polypropylenpolymeren B in dem ersten Extruder aufgeschmolzen, vermischt und zur Vorfolie extrudiert wird.

2. Verfahren nach Anspruch 1, **dadurch gekennzeichnet, dass** das Propylenpolymer B und das Propylenpolymer A das gleiche Polymere ist.

3. Verfahren nach Anspruch 1 oder 2, **dadurch gekennzeichnet, dass** das Propylenpolymeren A ein erstes Mal als Randstreifen und ein zweites Mal zusammen mit dem Polymeren B als Folie extrudiert wird.

4. Verfahren nach einem oder mehreren der Ansprüche 1 bis 3, **dadurch gekennzeichnet, dass** das Propylenpolymer A bei der Regranulierung des Randstreifenmaterials aufgeschmolzen, extrudiert und abgekühlt wird.

5. Verfahren nach einem oder mehreren der Ansprüche 1 bis 4, **dadurch gekennzeichnet, dass** der Anteil an recycliertem Polymer A in der Mischung aus Polymer B und recycliertem Polymer A 0,5 bis 40 Gew.-% beträgt.

6. Verfahren nach einem oder mehreren der Ansprüche 1 bis 5, **dadurch gekennzeichnet, dass** dem Propylenpolymeren B und dem Propylenpolymeren A Stabilisatoren und/oder Neutralisationsmittel zugesetzt sind.

7. Verfahren nach einem oder mehreren der Ansprüche 1 bis 6, **dadurch gekennzeichnet, dass** der Restaschegehalt des Propylenpolymeren A ≤70 ppm und der Chlorgehalt ≤50 ppm beträgt.

8. Verfahren nach einem oder mehreren der Ansprüche 1 bis 7, **dadurch gekennzeichnet, dass** das Propylenpolymer A eine Mischung aus verschiedenen Propylenpolymeren ohne Recyclat-Anteil ist.

9. Verfahren nach einem oder mehreren der Ansprüche 1 bis 8, **dadurch gekennzeichnet, dass** das Propylenpolymer B eine Mischung aus verschiedenen Propylenpolymeren ist.

**10.** Verfahren nach einem oder mehreren der Ansprüche 1 bis 9, **dadurch gekennzeichnet, dass** die Propylenpolymere A und B verschieden Polymere sind und sich die Schmelzpunkte des Propylenpolymere B und A um nicht mehr als 15°C voneinander unterscheiden.

**11.** Verfahren nach einem oder mehreren der Ansprüche 1 bis 10, **dadurch gekennzeichnet, dass** die Polypropylenfolie eine weitere Schicht aufweist.

**12.** Verfahren nach einem oder mehreren der Ansprüche 1 bis 11, **dadurch gekennzeichnet, dass** die Folie mehrschichtig ist und die Schicht aus Propylenpolymer A und B die Basisschicht der mehrschichtigen Folie bildet.

**13.** Verfahren nach einem oder mehreren der Ansprüche 1 bis 12, **dadurch gekennzeichnet, dass** die Folie ein- oder beidseitig Deckschichten aufweist, die 98 - 100 Gew.-% Propylenpolymer B enthalten.

**14.** Verfahren nach einem oder mehreren der Ansprüche 1 bis 13, **dadurch gekennzeichnet, dass** der abgetrennte Randbereich der Folie zu 99 - 100 Gew.-% aus Propylenpolymer A besteht.


**Claims**

**1.** A method for producing a biaxially oriented polypropylene film, comprising at least one layer in which propylene polymer B is heated and melted in a first extruder, and the melt of polypropylene polymer B is shaped and extruded through a flat-sheet die, and the melt coming out of the flat-sheet die is drawn off on one or more rollers and solidified to form the prefilm, this prefilm then being drawn in both longitudinal and transverse directions, **characterized in that**

A. propylene polymer A is heated and melted in a second extruder without a recyclate content, and
B. the melt of propylene polymer A is passed by the two sides of the propylene polymer melt B, so that all the melts are extruded jointly and simultaneously through the flat-sheet die, and the propylene polymer A without recyclate content forms the border region of the film during the production process, and
C. the two border regions of the propylene polymer A are cut after longitudinal and transverse drawing of the film, and
D. this film cut from the two border regions is melted and blended together with the propylene polymer B and extruded in the first extruder, to form the prefilm.

**2.** The method according to claim 1, **characterized in that** the propylene polymer B and the propylene polymer A are the same polymer.

**3.** The method according to claim 1 or 2, **characterized in that** the propylene polymer A is extruded the first time as a border strip and the second time together with polymer B as a film.

**4.** The method according to any one or more of claims 1 to 3, **characterized in that** the propylene polymer A is melted, extruded and cooled for regranulation of the border strip material.

**5.** The method according to any one or more of claims 1 to 4, **characterized in that** the amount of recycled polymer A in the blend of polymer B and recycled polymer A is 0.5 to 40 % by weight.

**6.** The method according to any one or more of claims 1 to 5, **characterized in that** stabilizers and/or neutralizing agents are added to propylene polymer B and propylene polymer A.

**7.** The method according to any one or more of claims 1 to 6, **characterized in that** the residual ash content of propylene polymer A is ≤ 70 ppm and the chlorine content is ≤ 50 ppm.

**8.** The method according to any one or more of claims 1 to 7, **characterized in that** propylene polymer A is a blend of different propylene polymers without a recycled content.

**9.** The method according to any one or more of claims 1 to 8, **characterized in that** propylene polymer B is a blend of various propylene polymers.

**10.** The method according to any one or more of claims 1 to 9, **characterized in that** propylene polymers A and B are different polymers and the melting points of propylene polymers B and A do not differ by more than 15 °C.

11. The method according to any one or more of claims 1 to 10, **characterized in that** the polypropylene film has an additional layer.

12. The method according to any one or more of claims 1 to 11, **characterized in that** the film has multiple layers, and the layer of propylene polymers A and B forms the base layer of the multi-layer film.

13. The method according to any one or more of claims 1 to 12, **characterized in that** the film has cover layers containing 98 - 100 % by weight propylene polymer B on one or both sides.

14. The method according to any one or more of claims 1 to 13, **characterized in that** the separated border region of the film consists of 99 - 100 % by weight propylene polymer A.

**Revendications**

1. Procédé de fabrication d'une feuille de polypropylène orientée biaxialement et comprenant au moins une couche, lequel consiste à faire chauffer et fondre du polymère de propylène B dans une première extrudeuse puis à faire passer la matière en fusion à travers une filière plate pour la mettre en forme et l'extruder, la matière en fusion sortant de ladite filière plate étant réceptionnée sur un ou plusieurs cylindres tireurs pour qu'elle se solidifie en formant une pré-feuille, cette pré-feuille étant orientée dans les sens longitudinal et transversal, **caractérisé en ce que**

A. dans une deuxième extrudeuse, on fait chauffer et fondre du polymère de propylène A ne comportant aucune proportion de matière recyclée, et
B. la matière en fusion issue du polymère de propylène A est amenée vers les deux parties latérales de la matière en fusion issue du polymère de propylène B, de manière à ce que l'ensemble des matières en fusion est extrudé simultanément à travers la filière plate et que le polymère de propylène A, qui ne comporte aucune proportion de matière recyclée, forme la zone marginale de la feuille pendant le processus de fabrication, et
C. les deux zones marginales, constituées de polymère de propylène A, sont découpées après l'orientation longitudinale et transversale de la feuille, et
D. ces chutes de feuille, issues des deux zones marginales, sont introduites ensemble avec le polymère de polypropylène B dans ladite première extrudeuse pour les faire fondre, les mélanger et les extruder en formant ladite pré-feuille.

2. Procédé selon la revendication 1, **caractérisé en ce que** le polymère de propylène B et le polymère de propylène A sont le même polymère.

3. Procédé selon les revendications 1 ou 2, **caractérisé en ce que** le polymère de propylène A est extrudé une première fois en tant que bande marginale et une deuxième fois ensemble avec le polymère B en tant que feuille.

4. Procédé selon l'une ou plusieurs des revendications 1 à 3, **caractérisé en ce que** le polymère de propylène A subit, lorsque la matière des bandes marginales est de nouveau transformée en granulat, une fusion, une extrusion et un refroidissement.

5. Procédé selon l'une ou plusieurs des revendications 1 à 4, **caractérisé en ce qu'**au sein du mélange de polymère B et de polymère A recyclé, la proportion de polymère A recyclé A est comprise entre 0,5 et 40 % en poids.

6. Procédé selon l'une ou plusieurs des revendications 1 à 5, **caractérisé en ce que** l'on ajoute des agents stabilisateurs et/ou des agents de neutralisation au polymère de propylène B et au polymère de propylène A.

7. Procédé selon l'une ou plusieurs des revendications 1 à 6, **caractérisé en ce que** le polymère de propylène A présente une teneur résiduelle en cendres $\leq 70$ ppm et une teneur en chlore $\leq 50$ ppm.

8. Procédé selon l'une ou plusieurs des revendications 1 à 7, **caractérisé en ce que** le polymère de propylène A est un mélange de différents polymères de propylène lesquels ne comportent aucune proportion de matière recyclée.

**9.** Procédé selon l'une ou plusieurs des revendications 1 à 8, **caractérisé en ce que** le polymère de propylène B est un mélange de différents polymères de propylène.

**10.** Procédé selon l'une ou plusieurs des revendications 1 à 9, **caractérisé en ce que** les polymères de propylène A et B sont des polymères différents et que la différence du point de fusion entre les polymères de propylène B et A est inférieure ou égale à 15 °C.

**11.** Procédé selon l'une ou plusieurs des revendications 1 à 10, **caractérisé en ce que** la feuille de polypropylène comporte une couche supplémentaire.

**12.** Procédé selon l'une ou plusieurs des revendications 1 à 11, **caractérisé en ce que** la feuille est multicouche et que la couche en polymère de propylène A et B forme la couche de base de la feuille multicouche.

**13.** Procédé selon l'une ou plusieurs des revendications 1 à 12, **caractérisé en ce que** la feuille présente, sur l'un de ses côtés ou sur les deux, des couches de couverture contenant 98 à 100 % en poids de polymère de propylène B.

**14.** Procédé selon l'une ou plusieurs des revendications 1 à 13, **caractérisé en ce que** la zone marginale, séparée de la feuille, est constituée à 99 à 100 % en poids de polymère de propylène A.

_Fig: 1_

_Fig: 2_

_Fig. 3_

Fig. 3a

*Fig. 4A*

*Fig. 4B*

EP 2 376 265 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0740993 A

- US 5252389 A